# EUROPÄISCHE PATENTSCHRIFT

(11) **EP 3 180 227 B1**
(45) Veröffentlichungstag und Bekanntmachung des Hinweises auf die Patenterteilung: **30.01.2019**
(21) Anmeldenummer: 15738883.6
(22) Anmeldetag: 10.07.2015
(51) Int. Cl.: B62D 1/181, B62D 1/28

(54) **FAHRZEUG-LENKUNG**
VEHICLE STEERING SYSTEM
SYSTÈME DE DIRECTION DE VÉHICULE

(30) Priorität: 13.08.2014 DE 102014216140
(43) Veröffentlichungstag der Anmeldung: 21.06.2017
(73) Patentinhaber: Bayerische Motoren Werke Aktiengesellschaft, 80809 München (DE)
(72) Erfinder: SCHMIDT, Roland, 82131 Stockdorf (DE); SCHOLZ, Hubert, 81543 München (DE)
(86) Internationale Anmeldenummer: PCT/EP2015/065894
(87) Internationale Veröffentlichungsnummer: WO 2016/023691

(56) Entgegenhaltungen:
- EP-A1- 1 985 520
- DE-A1- 19 645 404
- JP-A- 2012 040 977
- US-A1- 2013 002 416

## Beschreibung

Die Erfindung betrifft eine Lenkung eines Fahrzeugs, insbesondere eines Kraftfahrzeugs nach dem Oberbegriff des Anspruchs 1 und geht aus von der US 2013/002416 A1.

Fahrzeuglenkungen umfassen bekanntermaßen eine Lenkhandhabe, insbesondere ein Lenkrad zur manuellen Betätigung der Lenkung, wobei das Lenkrad über eine Lenksäule mit wenigstens einem lenkbaren Fahrzeugrad gekoppelt ist und durch Verdrehen der Lenksäule um eine Lenkungsachse dieses wenigstens ein Fahrzeugrad lenken, d.h. dessen Spurwinkel verstellen kann.

Aus dem Stand der Technik sind bereits Kraftfahrzeuglenkungen bekannt, bei denen das Lenkrad in Axialrichtung und/oder quer zur Axialrichtung verstellbar ist. Auf diese Weise ergeben sich Komfortfunktionen, die beispielsweise das Ein- und Aussteigen erleichtern sowie eine Anpassung der Lenkradposition an die Körpergröße des Fahrers ermöglichen.

Unter dem Stichwort "hochautomatisiertes Fahren" gibt es in der Kraftfahrzeugindustrie Bestrebungen, die Steuerung und damit insbesondere auch die Lenkung des Kraftfahrzeugs nach Art eines Autopiloten an eine elektronische Steuer- und Recheneinheit (sog. Bordcomputer) abzugeben, sodass der Fahrer keine Fahraufgaben mehr (bzw. diese zumindest nicht kontinuierlich) übernehmen muss und sich (zeitweise) anderen Tätigkeiten widmen kann.

Es hat sich allerdings herausgestellt, dass die Lenkradrotation beim automatischen Betätigen der Lenkung im hochautomatisierten Fahrbetrieb vom Fahrer als störend empfunden wird und außerdem unbeabsichtigte Lenkeingriffe durch den Fahrer auftreten können.

In der eingangs genannten Schrift ist ein Lenkrad für ein autonom bewegbares Kraftfahrzeug beschrieben, das in Richtung der Lenkrad-Drehachse verlagerbar ist, wobei entweder in einer ersten Position eine mechanische Verbindung zwischen dem Lenkrad und der zum Lenkgetriebe des Fahrzeugs führenden Lenkspindel oder Lenksäule, im weiteren allgemein Ausgangswelle genannt, herstellbar ist oder diese Verbindung getrennt und dann das Lenkrad in einer zweiten Position irgendwie blockiert wird, um unbeabsichtigte manuelle Lenkeingriffe des Fahrers zu verhindern.

Hiermit soll nun eine weitere Verbesserung einer solchen Fahrzeug-Lenkung aufgezeigt werden, dahingehend, dass das Lenkrad bei Verlagerung in Richtung seiner Drehachse sicher eine der beiden vorstehend genannten Positionen einnimmt.

Diese Aufgabe wird mit den Merkmalen des Anspruchs 1 gelöst, d.h. insbesondere mit einer Übertotpunkteinrichtung an einer zwischen einer ersten und zweiten Axialposition bewegbaren Lenkhandhabe, wobei die Übertotpunkteinrichtung zwischen der ersten und zweiten Axialposition der Lenkhandhabe eine instabile Gleichgewichtsstellung einnimmt und die Lenkhandhabe außerhalb der instabilen Gleichgewichtsstellung in Richtung der ersten oder zweiten Axialposition mit Kraft beaufschlagt. Die Übertotpunkteinrichtung stellt damit auf einfache Art und Weise sicher, dass sich eine Verriegelungseinrichtung, auf welche im weiteren noch eingegangen wird, entweder in ihrer Freigabestellung oder in ihrer Sperrstellung befindet, nicht jedoch in einer unerwünschten Zwischenstellung.

Eine erfindungsgemäße Lenkung für ein Kraftfahrzeug besitzt weiterhin eine Lenkhandhabe zur manuellen Betätigung der Lenkung, wenigstens ein lenkbares Kraftfahrzeugrad, das mit der Lenkhandhabe mechanisch koppelbar ist, eine um eine Lenkungsachse drehbare Lenksäule, die eine fest mit der Lenkhandhabe verbundene Eingangswelle und eine an die Eingangswelle koppelbare Ausgangswelle aufweist, deren Drehbewegung über ein Lenkgetriebe eine Lenkbewegung des lenkbaren Fahrzeug-Rads veranlasst, sowie ein Lenkungs-Blockierelement, das fest mit einer Karosserie des Kraftfahrzeugs verbunden ist, wobei eine Verriegelungseinrichtung vorgesehen ist, die eine Relativdrehung zwischen der Eingangswelle und dem karosseriefesten Lenkungs-Blockierelement wahlweise freigeben oder sperren kann, und wobei eine Kopplungseinrichtung vorgesehen ist, die eine Relativdrehung zwischen der Eingangswelle und der Ausgangswelle wahlweise freigeben oder sperren kann. Auf diese Weise lässt sich die mit der Lenkhandhabe drehfest verbundene Eingangswelle beim hochautomatisierten Fahren mit geringem Aufwand von der Ausgangswelle entkoppeln und an der Fahrzeugkarosserie fixieren.

Aufgrund dieser Entkopplung der Lenkhandhabe von dem wenigstens einen lenkbaren Kraftfahrzeugrad werden unbeabsichtigte manuelle Lenkeingriffe wirksam verhindert. Ferner kann der Fahrer das an der Fahrzeugkarosserie arretierte Lenkrad (= Lenkhandhabe) bspw. als feste Ablage nutzen, was zu einem erhöhten Fahrkomfort während des hochautomatisierten Fahrens beiträgt.

Die zwischen die Eingangswelle und das karosseriefeste Lenkungs-Blockierelement geschaltete Verriegelungseinrichtung ist zum Beispiel eine Kupplung, insbesondere eine Klauenkupplung.

Im übrigen ist die Lenkhandhabe zur Betätigung der Verriegelungseinrichtung axial verschieblich angeordnet, da eine solche Betätigung der Verriegelungseinrichtung vom Fahrer als besonders intuitiv empfunden wird und somit ebenfalls zu einem erhöhten Fahrkomfort beiträgt. Dabei gibt die Verriegelungseinrichtung in einer ersten Axialposition der Lenkhandhabe eine Relativdrehung zwischen der Eingangswelle und dem karosseriefesten Lenkungs-Blockierelement frei und sperrt in einer zweiten Axialposition der Lenkhandhabe eine Relativdrehung zwischen der Eingangswelle und dem karosseriefesten Bauteil, wobei die Lenkhandhabe vorzugsweise in der zweiten Axialposition einen geringeren axialen Abstand zur Ausgangswelle aufweisen kann als in der ersten Axialposition. Dann befindet sich die Lenkhandhabe bei Nichtgebrauch (bspw. in ihrer bereits genannten Funktion als feste Ablage) während des hochautomatisierten Fahrens weiter entfernt vom Fahrer als in ihrer eigentlichen Funktion zur manuellen Lenkungsbetätigung. Auch dieser größere axiale Abstand zwischen dem Fahrer und der Lenkhandhabe beim hochautomatisierten Fahren wirkt sich positiv auf den Fahrkomfort aus, da der Fahrer während des hochautomatisierten Fahrens mehr Bewegungsfreiheit genießt.

Weiterhin kann eine Arretiereinrichtung vorgesehen sein, welche die Lenkhandhabe in der ersten Axialposition und/oder in der zweiten Axialposition in Axialrichtung (der Lenksäule) betrachtet axial fixiert. Dadurch lässt sich mit geringem Aufwand eine unbeabsichtigte Betätigung der Verriegelungseinrichtung zuverlässig verhindern.

Die Arretiereinrichtung ist beispielsweise eine elektromagnetisch betätigte Arretiereinrichtung und kann eine axiale Verschiebung der Lenkhandhabe wahlweise freigeben oder sperren. Über die elektromagnetische Betätigung lassen sich mit geringem Aufwand Parameterbereiche von Sensordaten berücksichtigen, in denen ein Wechsel zwischen automatischer und manueller Betätigung der Lenkung ermöglicht bzw. unterbunden werden soll. Relevante Sensordaten könnten unter anderem der Lenkwinkel oder die Fahrzeuggeschwindigkeit sein, sodass beispielsweise während einer Kurvenfahrt und/oder bei hoher Fahrzeuggeschwindigkeit kein Wechsel zwischen automatischer und manueller Betätigung der Lenkung möglich ist.

Weiterhin kann ein Federelement vorgesehen sein, welches die Lenkhandhabe der Fahrzeuglenkung in die erste Axialposition beaufschlagt. Das Federelement kann somit die Lenkhandhabe (nach einem Warnhinweis für den Fahrer) von der zweiten Axialposition in die erste Axialposition bewegen, in welcher der Fahrer die Fahrzeugsteuerung wieder manuell übernehmen muss. Dies ist zum Beispiel dann vorteilhaft, wenn während des hochautomatisierten Fahrens eine Redundanzfunktion der Fahrzeuglenkung ausfällt, sodass das Lenksystem zwar noch funktionsfähig ist, jedoch nicht mehr die geforderte Ausfallsicherheit aufweist.

Gemäß einer weiteren Ausführungsform der Kraftfahrzeuglenkung ist die Kopplungseinrichtung eine Kupplung, insbesondere eine Klauenkupplung, wobei die Lenkhandhabe zur Betätigung der Kopplungseinrichtung vorzugsweise axial verschieblich angeordnet ist. Eine solche Betätigung der Kopplungseinrichtung wird vom Fahrer als besonders intuitiv empfunden und trägt folglich zu einem erhöhten Fahrkomfort bei.

Insbesondere kann die Kopplungseinrichtung in einer ersten Axialposition der Lenkhandhabe eine Relativdrehung zwischen der Eingangswelle und der Ausgangswelle sperren, sowie in einer zweiten Axialposition der Lenkhandhabe eine Relativdrehung zwischen der Eingangswelle und der Ausgangswelle freigeben. Speziell in Verbindung mit einer axialen Betätigung der Verriegelungseinrichtung ergibt sich dadurch ein besonders einfaches Umschalten zwischen manuellem und hochautomatisiertem Fahren. Durch einfache axiale Verschiebung der Lenkhandhabe lässt sich die Lenkhandhabe von der Ausgangswelle der Lenksäule entkoppeln und am karosseriefesten Lenkungs-Blockierelement fixieren (hochautomatisiertes Fahren) oder mit der Ausgangswelle drehfest koppeln und gegenüber dem karosseriefesten Lenkungs-Blockierelement verdrehen (manuelles Fahren).

Gemäß einer weiteren Ausführungsform einer erfindungsgemäßen Fahrzeuglenkung kann die Kopplungseinrichtung nach Art eines Überlagerungsgetriebes ausgebildet sein. Dieses kann einen Antrieb zur elektromechanischen Betätigung der Lenkung aufweisen, sowie einen Überlagerungsring, der sowohl mit der Ausgangswelle als auch mit der Eingangswelle koppelbar ist und vom Antrieb entweder blockiert oder um die Lenkungsachse verdreht werden kann. Der Antrieb ist insbesondere als Schneckenantrieb ausgeführt und kann während des hochautomatisierten Fahrens direkt eine Lenkwinkelvorgabe für das Lenkgetriebe bereitstellen, sodass im Lenkgetriebe selbst kein redundanter Antrieb mehr erforderlich ist. Alternativ kann der Überlagerungsring anstelle des Antriebs von einer Sperreinheit blockiert werden oder dessen Rotation um die Lenkungsachse freigeben werden. Die Sperreinheit kann elektromagnetisch betätigt werden und dementsprechend abhängig von vorgegebenen Parametern eine Relativdrehung zwischen der Eingangswelle und der Ausgangswelle freigeben oder sperren.

An einer erfindungsgemäßen Lenkung sind die Kopplungseinrichtung und die Verriegelungseinrichtung vorzugsweise mechanisch oder elektrisch/elektronisch so miteinander gekoppelt, dass die Kopplungseinrichtung in einer Sperrstellung der Verriegelungseinrbhtung ihre Freigabestellung einnimmt, und umgekehrt. Somit weist die Fahrzeuglenkung lediglich zwei definierte Schaltzustände auf, welche dem "manuellen Fahren" bzw. dem "hochautomatisierten Fahren" zugeordnet sind. Beim manuellen Fahren befindet sich die Verriegelungseinrichtung in ihrer Freigabestellung und die Kopplungseinrichtung in ihrer Sperrstellung, wohingegen sich beim hochautomatisierten Fahren die Verriegelungseinrichtung in ihrer Sperrstellung und die Kopplungseinrichtung in ihrer Freigabestellung befindet.

Ehe die soweit angegebenen verschiedenen Merkmale anhand möglicher und in den beigefügten Figuren dargestellter Figuren (einschließlich weiterer Merkmale und Vorteile der Erfindung) weiter erläutert werden, seien zunächst noch einige weitere vorteilhafte Weiterbildungen genannt:
So kann in einem Fahrzeug mit einer erfindungsgemäßen Lenkung und einem elektromotorisch verstellbaren Fahrersitz letztgenannter im Falle der zweiten Axialposition der Lenkhandhabe, in welcher diese einen geringeren axialen Abstand zur Ausgangswelle aufweist als in der ersten Axialposition, angesteuert durch eine elektronische Steuereinheit in eine Position verfahren werden, in welcher auch der Fahrersitz von der Ausgangswelle axial betrachtet weiter beabstandet ist als in der genannten ersten Axialposition der Lenkhandhabe. Damit erhält der Fahrer beim hochautomatisierten Fahren noch mehr Freiraum.

Ferner kann vorgesehen sein, dass eine elektronische Steuereinheit eine axiale Verschiebung der Lenkhandhabe zur Ausgangswelle hin - sei es durch den Fahrer veranlasst oder durch eine elektromechanische Stelleinheit veranlasst - nur dann ermöglicht, wenn sich das Fahrzeug überhaupt in einem hochautomatisierten Fahrbetrieb bewegen kann bzw. wenn das Fahrzeug überhaupt in den Zustand des hochautomatisierten Fahrens überführt werden kann. Letzteres kann insbesondere bei Kurvenfahrten sowie bei höheren Fahrgeschwindigkeiten ausgeschlossen sein. Ferner kann eine solche elektronische Steuereinheit eine axiale Verschiebung der Lenkhandhabe von der Ausgangswelle weg (und somit zum Fahrer hin dann selbsttätig veranlassen, wenn ein Fehlerüberwachungssystem für einen hochautomatisierten Fahrbetrieb des Fahrzeugs einen sicherheitsrelevanten Fehler erkennt, weshalb dieser Zustand des hochautomatisierten Fahrers schnellstmöglich beendet werden sollte. Das entsprechende Zurückführen der Lenkhandhabe zum Fahrer hin kann dabei elektromechanisch oder wie bereits erläutert durch ein geeignetes Federelement erfolgen.

Ferner kann vorgesehen sein, dass die Lenkhandhabe in der zweiten Axialposition (des hochautomatisierten Fahrens) mit einen geringeren axialen Abstand zur Ausgangswelle zumindest anteilig zumindest annähernd bündig in einer Armaturentafel oder dgl. des Fahrzeugs liegt und dann eine Anzeige- und oder Bedieneinheit für den Fahrer aus der Armaturentafel in das direkte Sichtfeld des Fahrers verlagert wird.

Nachfolgend nun die Beschreibung von Ausführungsbeispielen unter Bezugnahme auf die Zeichnungen. In diesen zeigen:
- Figur 1 eine schematische Skizze einer ersten Ausführungsform der erfindungsgemäßen Lenkung in einem Schaltzustand für "manuelles Fahren";
- Figur 2 eine weitere schematische Skizze der Lenkung gemäß Figur 1 im Schaltzustand für "manuelles Fahren";
- Figur 3 eine schematische Skizze der Lenkung gemäß Figur 1 in einem Schaltzustand für "hochautomatisiertes Fahren";
- Figur 4 eine weitere schematische Skizze der Lenkung gemäß Figur 1 im Schaltzustand für "hochautomatisiertes Fahren";
- Figur 5 eine schematische Skizze einer zweiten Ausführungsform der erfindungsgemäßen Lenkung in einem Schaltzustand für "manuelles Fahren";
- Figur 6 eine weitere schematische Skizze der Lenkung gemäß Figur 5 in einem Schaltzustand für "hochautomatisiertes Fahren";
- Figur 7 eine schematische Skizze einer dritten Ausführungsform der erfindungsgemäßen Lenkung in einem Schaltzustand für "manuelles Fahren";
- Figur 8 eine weitere schematische Skizze der Lenkung gemäß Figur 7 in einem Schaltzustand für "hochautomatisiertes Fahren";
- Figur 9 eine schematische Skizze einer vierten Ausführungsform der erfindungsgemäßen Lenkung in einem Schaltzustand für "manuelles Fahren"; und
- Figur 10 eine weitere schematische Skizze der Lenkung gemäß Figur 9 in einem Schaltzustand für "hochautomatisiertes Fahren".

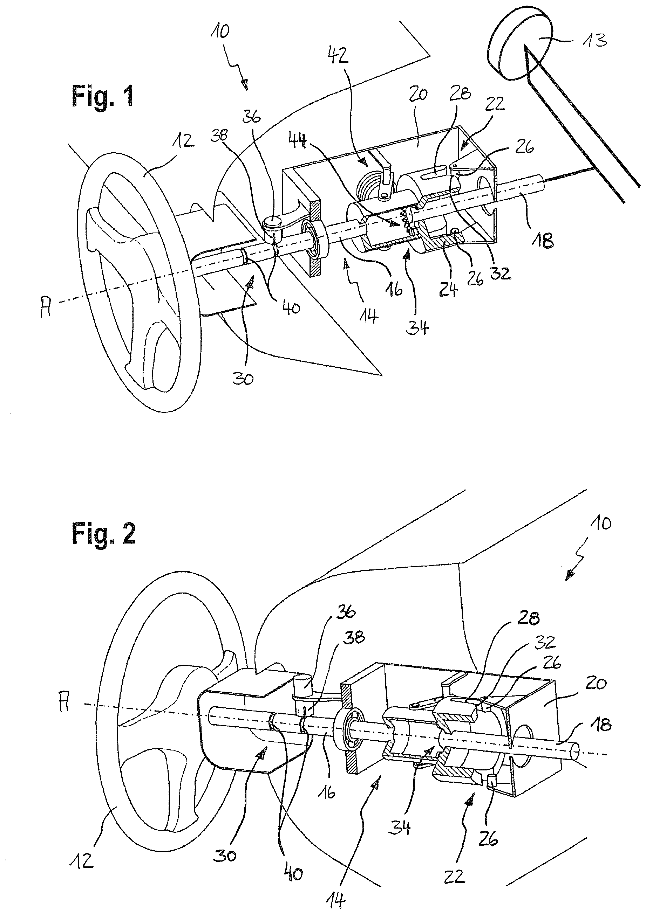

Die Figuren 1 bis 10 zeigen jeweils eine schematische Perspektivansicht einer Lenkung 10 für ein Kraftfahrzeug, mit einer als Lenkrad ausgebildeten Lenkhandhabe 12 zur manuellen Betätigung der Lenkung 10, einem in Figur 1 symbolisch dargestellten, lenkbaren Fahrzeugrad 13, das mit der Lenkhandhabe 12 mechanisch koppelbar ist, einer um eine Lenkungsachse A drehbaren Lenksäule 14, die eine fest mit der Lenkhandhabe 12 verbundene Eingangswelle 16 und eine an die Eingangswelle 16 koppelbare Ausgangswelle 18 aufweist, deren Drehbewegung über ein Lenkgetriebe eine Lenkbewegung des lenkbaren Fahrzeug-Rads 13 veranlasst. Vorgesehen ist ferner ein Lenkungs-Blockierelement 20, das fest mit einer Karosserie des Kraftfahrzeugs verbunden ist. Die Lenkung 10 umfasst weiterhin eine Verriegelungseinrichtung 22, die eine Relativdrehung zwischen der Eingangswelle 16 und dem karosseriefesten Lenkungs-Blockierelement 20 wahlweise freigeben oder sperren kann.

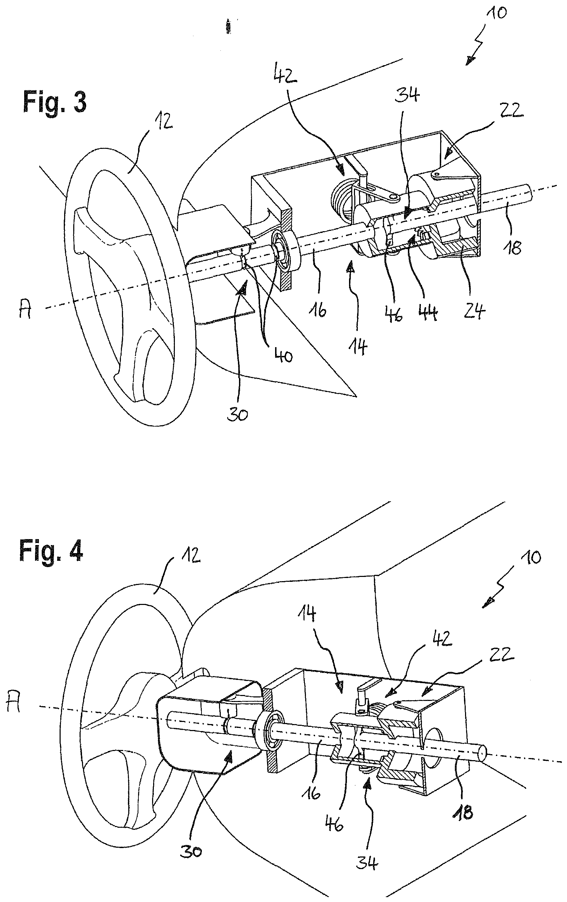

Zur Betätigung der Verriegelungseinrichtung 22 ist die Lenkhandhabe 12 in den dargestellten Ausführungsbeispielen axial (bezüglich der Lenkungsachse A, in deren Rchtung sich die Lenksäule 14 erstreckt) verschiebbar angeordnet, wobei die Verriegelungseinrichtung 22 in einer ersten Axialposition der Lenkhandhabe 12 gemäß den Figuren 1, 2, 5, 7 und 9 eine Relativdrehung zwischen der Eingangswelle 16 und dem karosseriefesten Lenkungs-Blockierelement 20 freigibt sowie in einer zweiten Axialposition der Lenkhandhabe 12 gemäß den Figuren 3, 4, 6, 8 und 10 eine Relativdrehung zwischen der Eingangswelle 16 und dem karosseriefesten Lenkungs-Blockierelement 20 sperrt. Dabei weist die Lenkhandhabe 12 in der zweiten Axialposition einen geringeren axialen Abstand zur Ausgangswelle 18 auf als in der ersten Axialposition.

In den dargestellten Ausführungsbeispielen ist die Verriegelungseinrichtung 22 als Kupplung, insbesondere als Klauenkupplung ausgebildet.

Gemäß den Figuren 1 bis 10 ist die Verriegelungseinrichtung 22 aus einem fest mit der Eingangswelle 16 verbundenen Verriegelungstopf 24 sowie karosseriefesten Verriegelungsstiften 26 zusammengesetzt, wobei der Verriegelungstopf 24 axiale Schlitze 28 aufweist, in welche die Verriegelungsstifte 26 bei entsprechender Drehstellung der Lenkhandhabe 12 eingreifen können. Sobald die Verriegelungsstifte 26 in die Schlitze 28 eingreifen, ist keine nennenswerte Drehbewegung der Eingangswelle 16 sowie der Lenkhandhabe 12 mehr möglich. Dabei ist bspw. gemäß Figuren 3, 4 die Eingangswelle 16 und die Lenkhandhabe 12 in axialer Richtung soweit als möglich zur Ausgangswelle 28 hin verschoben. Freigängig verdrehbar ist die Lenkhandhabe 12 sowie die Eingangswele 16 hingegen dann, wenn diese bspw. gemäß den Figuren 1, 2 in axialer Richtung soweit als möglich von der Ausgangswelle 18 weg verlagert sind.

Konkret weist der Verriegelungstopf 24 zwei einander gegenüberliegende axiale (d.h. sich in Achsrichtung der Lenksäule 14 erstreckende) Schlitze 28 auf, und das karosseriefeste Lenkungs-Blockierelement 20 umfasst zwei einander gegenüberliegende Verriegelungsstifte 26, die sich in radialer Richtung (radial bezüglich der Lenksäule 14) erstrecken und in der jeweils dargestellten Mittenstellung der Lenkhandhabe 12 jeweils axial an die Schlitze 28 angrenzen. Dementsprechend ist eine axiale Verschiebung der Lenkhandhabe 12 von der ersten Axialposition in die zweite Axialposition insbesondere bei einer Geradeausfahrt des Kraftfahrzeugs möglich. Da beim vorliegenden Ausführungsbeispiel wie ersichtlich zwei einander bezüglich der Lenksäule 14 diametral gegenüberliegende Verriegelungsstifte 26 und Schlitze 28 vorgesehen sind, wäre theoretisch auch bei einem starken Lenkeinschlag der Lenkhandhabe 12 von etwa 180° eine Axialverschiebung in die zweite Axialposition denkbar, wobei dies in der Regel unerwünscht ist und beispielsweise mittels einer von einer elektronischen Steuereinheit geeignet betätigten Arretiereinrichtung 30 unterbunden werden kann, auf die weiter unten noch genauer eingegangen wird.

Wie zum Beispiel in den Figuren 1 und 2 angedeutet, können die Schlitze 28 angrenzend an einen axialen Rand des Verriegelungstopfs 24 Einführschrägen 32 aufweisen, welche auch bei geringfügigen Winkelabweichungen der Lenkhandhabe 12 gegenüber der Geradeausstellung eine Axialverschiebung von der ersten Axialposition in die zweite Axialposition ermöglichen und dabei die Lenkhandhabe 12 in ihre Mittenposition (= exakte Geradeausstellung) verdrehen.

Die Lenkung 10 umfasst ferner eine Kopplungseinrichtung 34, die eine Relativdrehung zwischen der Eingangswelle 16 und der Ausgangswelle 18 wahlweise freigeben oder sperren kann. Dabei sind die Kopplungseinrichtung 34 und die Verriegelungseinrichtung 22 mechanisch oder elektrisch bzw. elektronisch über eine elektronische Steuereinheit so miteinander gekoppelt, dass die Kopplungseinrichtung 34 in einer Sperrstellung der Verriegelungseinrichtung 22 ihre Freigabestellung sowie in einer Freigabestellung der Verriegelungseinrichtung 22 ihre Sperrstellung einnimmt.

Folglich weist die Kraftfahrzeuglenkung 10 einen ersten Schaltzustand auf, in dem die Lenkhandhabe 12 im Wesentlichen drehfest mit der Ausgangswelle 18 verbunden ist und relativ zum karossieriefesten Lenkungs-Blockierelement 20 verdreht werden kann, sowie einen zweiten Schaltzustand, in dem die Lenkhandhabe 12 am karosseriefesten Lenkungs-Blockierelement 20 drehfest fixiert ist, wobei die Ausgangswelle 18 mittels eines geeigneten Aktuators relativ zur Lenkhandhabe 12 verdreht werden kann. Der erste Schaltzustand der Lenkung 10 ist dabei dem "manuellen Fahren" zugeordnet, bei dem der Fahrer das Kraftfahrzeug über die Lenkhandhabe 12 aktiv lenkt, während der zweite Schaltzustand dem "hochautomatisierten Fahren" zugeordnet ist, bei dem die Lenkung 10 des Kraftfahrzeugs bzw. dessen Lenkvorgang ohne Beteiligung des Fahrers automatisch durch einen Bordcomputer betätigt bzw. vorgenommen wird. Um in diesem Fall beim automatischen Verstellen des lenkbaren Kraftfahrzeugrads 13 eine Rückwirkung auf den Fahrer, nämlich eine sichtbare und/oder spürbare Verdrehung der Lenkhandhabe 12, zu verhindern, ist die Lenkhandhabe 12 bzw. die Eingangswelle 16 von der Ausgangswelle 18 entkoppelt. Ferner ist die Lenkhandhabe 12 drehfest am karosseriefesten Lenkungs-Blockierelement 20 fixiert, sodass sie während des hochautomatisierten Fahrens in vorteilhafter Weise starr steht und bspw. als stabile und feste Ablage für den Fahrer dienen kann. Ein unbeabsichtigter, manueller Lenkeingriff durch den Fahrer ist in diesem zweiten Schaltzustand der Lenkung 10 vorteilhafterweise ausgeschlossen.

Wie bereits oben erwähnt und in den Figuren 1 bis 10 dargestellt, weist die Kraftfahrzeuglenkung 10 eine Arretiereinrichtung 30 auf, welche die Lenkhandhabe 12 in der ersten und zweiten Axialposition (der Eingangswelle 16) axial fixiert. Die Arretiereinrichtung 30 ist in den dargestellten Ausführungsbeispielen angesteuert durch eine elektronische Steuereinheit elektromagnetisch betätigbar und kann ausgehend von der ersten oder zweiten Axialposition eine axiale Verschiebung der Lenkhandhabe 12 (mit Eingangswelle 16) wahlweise freigeben oder sperren.

Konkret umfasst die Arretiereinrichtung 30 einen elektromagnetischen Aktuator 36 mit einem radial (bezüglich der Lenksäule 14) verstellbaren Bolzen 38 sowie zwei in der Eingangswelle 16 ausgebildete, in Umfangsrichtung umlaufende Nuten 40, in welche der Bolzen 38 eingreifen kann, um die Lenkhandhabe 12 in ihrer ersten oder zweiten Axialposition zu fixieren bzw. die Lenkung 10 in ihrem ersten oder zweiten Schaltzustand zu halten.

Die Arretiereinrichtung 30 wird von einer bereits genannten elektronischen Steuereinheit unter Berücksichtigung geeigneter Signale einer Fahrzeug-Sensorik angesteuert und ermöglicht oder verhindert damit eine axiale Verstellung der Lenkhandhabe 12 abhängig von vorbestimmten Parametern. Relevante Parameter sind unter anderem der aktuelle Lenkwinkel oder die Fahrzeuggeschwindigkeit, sodass die Arretiereinrichtung 30 beispielsweise eine axiale Verstellung der Lenkhandhabe 12 im Wesentlichen nur bei Geradeausfahrt und geringen Fahrzeuggeschwindigkeiten freigibt und im Übrigen eine Änderung des Schaltzustands der Lenkung 10, d.h. der Axialposition von Eingangswelle 16 und Lenkhandhabe 12 verhindert

Um sicherzustellen, dass die Lenkhandhabe 12 entweder ihre erste Axialposition gemäß den Figuren 1, 2, 5, 7 und 9 oder ihre zweite Axialposition gemäß den Figuren 3, 4, 6, 8 und 10 einnimmt und keine dazwischenliegende undefinierte Zwischenposition, ist in den dargestellten Ausführungsbeispielen der Lenkung 10 eine sogenannte Übertotpunkteinrichtung 42 vorgesehen, welche zwischen der ersten und zweiten Axialposition der Lenkhandhabe 12 eine instabile Gleichgewichtsstellung einnimmt und die Lenkhandhabe 12 außerhalb der instabilen Gleichgewichtsstellung in die erste oder zweite Axialposition beaufschlagt. Die Funktionsweise der Übertotpunkteinrichtung 42 wird besonders deutlich aus einem direkten Vergleich der Figuren 1 und 3 ersichtlich. Hierin erkennt man einen schwenkbar an der Außenwand eines in Form eines Hohlzylinders gestalteten und somit in Radialrichtung erweiterten Abschnitts der Eingangswelle 16 befestigten L-förmigen Hebel, dessen erster schwenkbar am soeben genannten Hohlzylinder befestigter Schenkel ein Langloch aufweist, in welches ein am Lenkungs-Blockierelement 20 befestigter Bolzen eingreift. Der andere rechtwinkelig zum vorstehend genannten Schenkel des besagten Hebels stehende Schenkel liegt an einem Druckfederelement, auf welches in Fig.3 der Pfeil der Bezugsziffer 42 gerichtet ist, an. Klar erkennbar ist somit, dass bei einer Verlagerung der Lenkhandhabe 12 von der in Fig.1 gezeigten Position in die in Fig.3 gezeigte Position oder zurück dieses Druckfederelement zunächst komprimiert wird, solange bis der erstgenannte Schenkel des besagten Hebels senkrecht zur Achse A der Lenksäule 14 steht, und mit weiterer Annäherung zur anderen Endposition hin wieder entspannt wird.

Alternativ zu der dargestellten Übertotpunkteinrichtung 42 kann auch eine Tellerfeder mit geeigneter Federkennlinie zum Einsatz kommen. Im Übrigen sind auch Ausführungsvarianten der Lenkung 10 denkbar, bei denen anstelle der Arretiereinrichtung 30 und der Übertotpunkteinrichtung 42 ein elektromechanischer Antrieb zum axialen Verschieben der Lenkhandhabe 12 vorgesehen ist und welcher so ausgelegt ist, dass er die Lenkhandhabe stets in eine beiden Endpositionen verfährt.

Die Figuren 1 bis 4 zeigen die Lenkung 10 für ein Kraftfahrzeug gemäß einer ersten Ausführungsform, bei der die Lenkhandhabe 12 zur Betätigung der Kopplungseinrichtung 34 axial verschiebbar angeordnet und die Kopplungseinrichtung 34 als Kupplung nach Art einer Klauenkupplung ausgebildet ist. Speziell anhand der Figuren 1 und 3 wird deutlich, dass die Klauenkupplung (34) einen mit der Eingangswelle 16 fest verbundenen fein verzahnten Zahnkranz 44 aufweist, der an der Innenwand des bereits genannten und in Form eines Hohlzylinders erweiterten Abschnitts der Eingangswelle 16 vorgesehen ist, und in den fest mit der Ausgangswelle 18 verbundene Kupplungsklauen 46 in nahezu jeder beliebigen Winkelstellung eingekuppelt werden können. Beim vorliegenden Ausführungsbeispiel sind dabei an der der Eingangswelle 16 zugewandten Stirnseite der Ausgangswelle 18 einander diametral gegenüber liegend zwei solche Kupplungsklauen 46 vorgesehen, wie den Figuren 3, 4, welche den entkoppelten Zustand zeigen, entnehmbar ist. Das Einkuppeln bzw. Auskuppeln der Kopplungseinrichtung erfolgt dabei mit einem axialen Verlagern der Lenkhandhabe 12 mit der Eingangswelle 16 gegenüber der axial nicht verlagerbaren Ausgangswelle 18.

Außerdem ist anhand der Figuren 1 - 4 erkennbar, dass die Kopplungseinrichtung 34 in der ersten Axialposition der Lenkhandhabe 12 eine Relativdrehung zwischen der Eingangswelle 16 und der Ausgangswelle 18 sperrt (siehe Figuren 1 und 2 - dort greifen die Kupplungsklauen 46 in den Zahnkranz 44 ein) sowie in der zweiten Axialposition der Lenkhandhabe 12 eine Relativdrehung zwischen der Eingangswelle 16 und der Ausgangswelle 18 freigibt (siehe Figuren 3 und 4-dort befinden sich die Kupplungsklauen 46 beabstandet vom Zahnkranz).

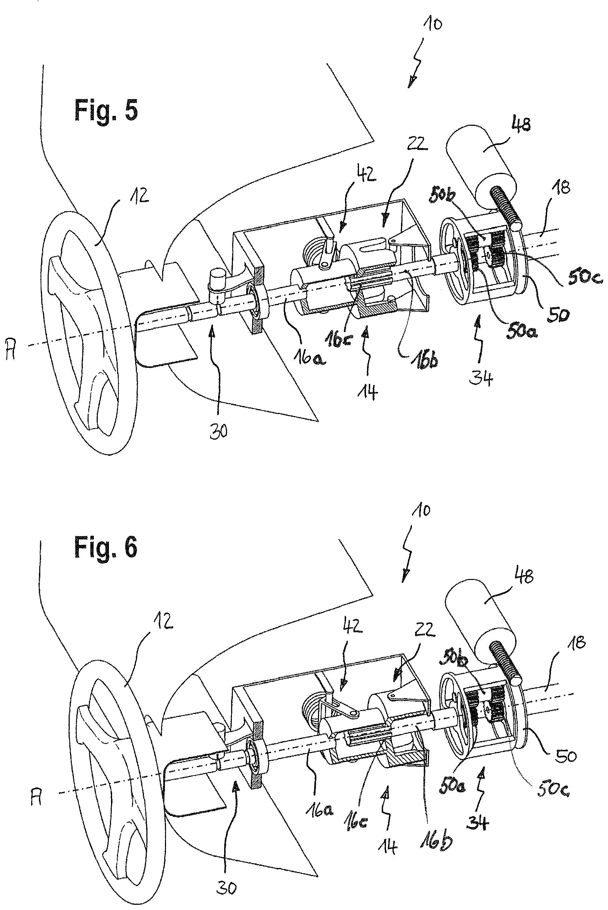

Die Figuren 5 bis 10 zeigen alternative Ausführungsformen der Lenkung 10 für ein Kraftfahrzeug, welche sich von der ersten Ausführungsform gemäß den Figuren 1 bis 4 dadurch unterscheiden, dass die Kopplungseinrichtung 34 nicht als Klauenkupplung, sondern als Überlagerungsgetriebe bzw. nach Art eines solchen Überlagerungsgetriebes ausgebildet ist.

Die Figuren 5 und 6 zeigen eine zweite Ausführungsform, bei der das Überlagerungsgetriebe zur elektromechanischen Betätigung der Lenkung 10 einen Antrieb 48 sowie einen hülsenförmigen bzw. nach Art eines Hohlzylinders ausgebildeten Überlagerungsring 50 aufweist. Mit seinem in den Figuren linksseitigen Endabschnitt ist der Überlagerungsring 50 drehbar auf einem Achsstummel 16b der bei den Ausführungsbeispielen nach den Figuren 5 - 10 zweiteiligen Eingangswelle 16 gelagert. Dabei ist der Achsstummel 16b nicht axial verlagerbar, sondern es ist nur ein der Lenkhandhabe 12 zugeordneter und zugewandter Teilabschnitt 16a der Eingangswelle zusammen mit der Lenkhandhabe 12 axial verlagerbar. Miteinander geeignet gekoppelt sind dabei dieser Teilabschnitt 16a der Eingangswelle 16 sowie deren Achsstummel 16b über ein geeignetes Keilwellenprofil 16c, welches zwischen dem bereits genannten Verriegelungstopf 24 des Teilabschnitts 16a der Eingangswelle 16 und dem Achsstummel 16b vorgesehen ist und in üblicher Weise den Teilabschnitt 16a drehfest mit dem Achsstummel 16b verbindet und gleichzeitig ein relative axiale Verlagerung zwischen diesen beiden Bauteilen erlaubt.

Der Überlagerungsring 50 weist außenseitig eine geeignete Verzahnung auf, mit welcher der Antrieb 48 kämmt, so dass der Überlagerungsring 50 durch den Antrieb 48 gegenüber dem Achsstummel 16b und somit um die Lenkungsachse A verdreht werden kann. Wegen seiner vorteilhaften Selbsthemmungseigenschaften ist der Antrieb 48 insbesondere als Schneckenantrieb ausgebildet, wobei die nicht separat gekennzeichnete Schnecke des Antriebs 48, die mit der Verzahnung des Überlagerungsrings 50 kämmt, mittels eines Elektromotors und angesteuert von einer elektronischen Steuereinheit geeignet angetrieben werden kann.

Innerhalb des Überlagerungsrings 50 ist auf der Lenkungsachse A liegend zunächst ein Antriebsritzel 50a vorgesehen, welches starr mit dem dem Teilabschnitt 16a abgewandten Ende des Achsstummels 16b verbunden ist. Mit diesem Antriebsritzel 50a kämmt ein erstes Zahnrad einer Übertragungswelle 50b, die im Überlagerungsring 50 - genauer in dessen beiden Stirnseiten - abseits der Lenkungsachse A sowie parallel zu dieser drehbar gelagert ist. Am anderen Ende dieser Übertragungswelle 50b und innerhalb des Überlagerungsringes 50 liegend ist ein weiteres Zahnrad vorgesehen, welches mit einem auf der Lenkungsachse A im Überlagerungsring 50 drehbar gelagerten Abtriebsritzel 50c kämmt. Dieses Abtriebsritzel 50c wiederrum ist mit der Ausgangswelle 18 der Lenkung 10 drehfest verbunden.

Ist somit beim Ausführungsbeispiel nach den Figuren 5, 6 der selbsthemmende Antrieb 48 stillstehend und damit der Überlagerungsring 50 gegen Verdrehen um die Lenkungsachse A blockiert, so wird eine (gemäß Figur 5 nicht durch die Verriegelungseinrichtung 22 blockierte) Drehbewegung des Achsstummels 16b der Eingangswelle 16 über die Übertragungswelle 50b unverändert auf die Ausgangswelle 18 übertragen. Blockiert hingegen gemäß Figur 6 die Verriegelungseinrichtung 22 den Achsstummel 16b bzw. eine Drehbewegung desselben, so dass dieser stillsteht, so kann die Abtriebswelle 18 dennoch drehen, wenn eine Drehbewegung des Überlagerungsringes 50 um die Lenkungsachse ermöglicht wird. Eine solche Drehbewegung des Überlagerungsringes 50 ist dann möglich, wenn der Antrieb 48 geeignet aktiv ist, d.h. den Überlagerungsring 50 geeignet aktiv verdreht. Vorteilhafterweise kann also dann mittels des Antriebs 48 auch die Ausgangswelle 18 wie gewünscht verdreht werden, um am lenkbaren FahrzeugRad 13 einen gewünschten Lenkeinschlag darzustellen. Damit ist ein einziger weiterer elektrischer Stellmotor im Lenksystem, welcher als Servomotor fungiert und beim Lenken durch den Fahrer diesen momentenmäßig unterstützt, ausreichend; eine weitere Redundanz im Lenksystem für das eingangs genannte hochautomatisierte Fahren ist damit nicht erforderlich.

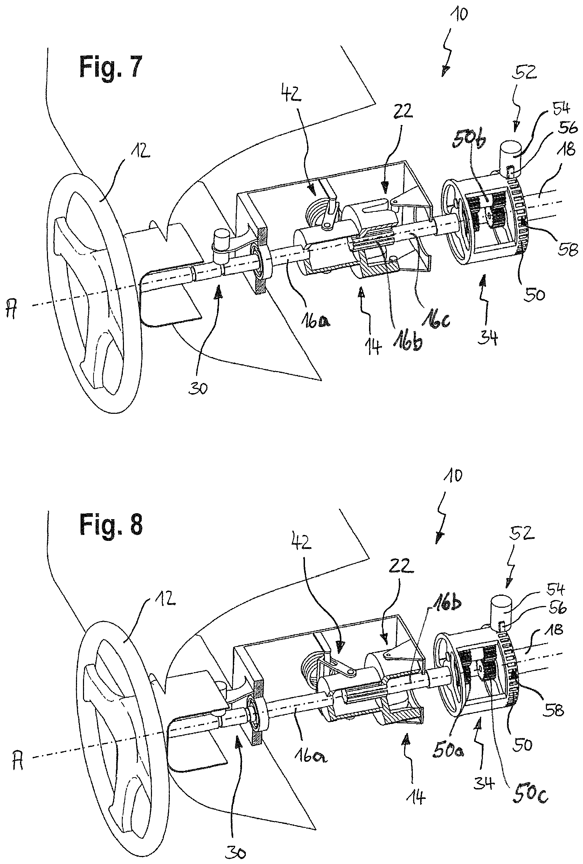

Die Figuren 7 und 8 zeigen eine dritte Ausführungsform, bei der als Kopplungseinrichtung 34 weiterhin der Überlagerungsring 50 mit den innerhalb dessen angeordneten Bauelementen (Antriebsritzel 50a, Übertragungswelle 50b, Abtriebsritzel 50c) analog dem Ausführungsbeispiel der Figuren 5, 6 vorgesehen ist, jedoch anstelle des dortigen Antriebs 48 lediglich eine Sperreinheit 52 vorgesehen ist. Hier handelt es sich also nicht mehr um ein Überlagerungsgetriebe in vollständigem Umfang. Vielmehr kann die Sperreinheit eine Rotation bzw. Drehbewegung des Überlagerungsrings 50 um die Lenkungsachse A wahlweise freigeben oder sperren.

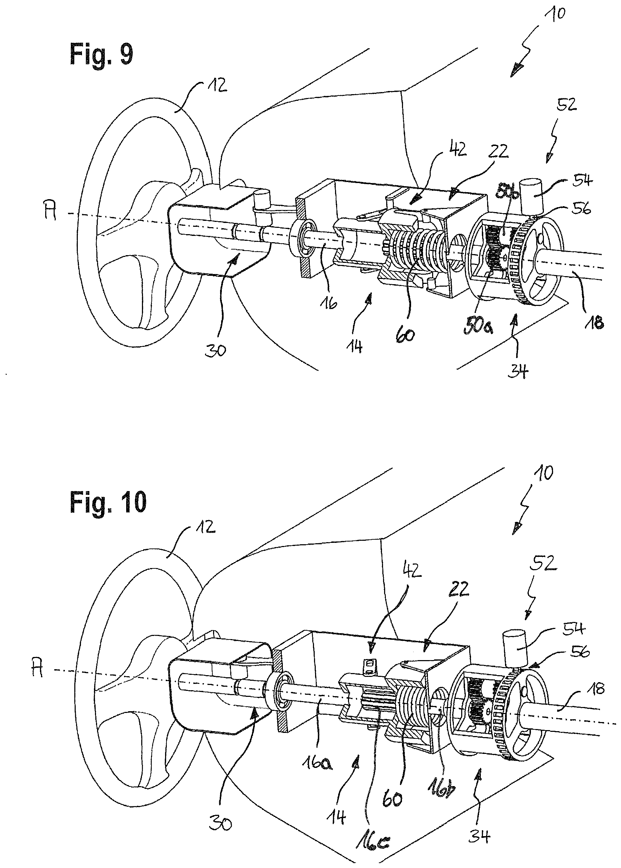

Die Sperreinheit 52 ist im dargestellten Ausführungsbeispiel eine elektromagnetisch betätigte Sperreinheit 52 mit einem elektromagnetischen Aktuator 54 und einem radial (bezüglich der Lenkungsachse A) verschiebbaren Bolzen 56 (siehe Figuren 9 und 10), welcher im ersten Schaltzustand der Lenkung 10 für manuelles Fahren in eine Verzahnung 58 des Überlagerungsrings 50 eingreift (siehe Figuren 7 und 9) sowie im zweiten Schaltzustand der Lenkung 10 für hochautomatisiertes Fahren nicht in die Verzahnung 58 des Überlagerungsrings 50 eingreift (siehe Figuren 8 und 10). Im ersten Schaltzustand sind damit die Verhältnisse analog wie zu Fig.5 erläutert, während im zweiten Schaltzustand der Überlagerungsring 50 frei drehen kann, so dass auch die Ausgangswelle 18 frei drehen kann, während die Eingangswelle 16 bzw. deren Achsstummel 16b gegen Verdrehen blockiert ist. Abweichend vom Ausführungsbeispiel nach den Figuren 5, 6 ist hier jedoch zumindest ein (und aus Redundanzgründen defacto zwei) eigenständige(r) Antrieb(e) für die Ausgangswelle 18 erforderlich.

Schließlich zeigen die Figuren 9 und 10 eine vierte Ausführungsform, welche sich von der Lenkung 10 gemäß den Figuren 7 und 8 lediglich dadurch unterscheidet, dass zusätzlich ein Federelement 60 vorgesehen ist, welches die Lenkhandhabe 12 sowie den Teilabschnitt 16a der Eingangswelle in Richtung ihrer ersten Axialposition gemäß Figur 9 mit Federkraft beaufschlagt. Über das Federelement 60 lässt sich die Lenkung 10 ohne Zutun des Fahrers von der zweiten Schaltstellung für hochautomatisiertes Fahren (Figur 10) in die erste Schaltstellung für manuelles Fahren (Figur 9) überführen, wobei der Fahrer zuvor selbstverständlich auf eine entsprechende Änderung des Schaltzustands der Lenkung 10 optisch, akustisch und/oder haptisch aufmerksam gemacht werden sollte. Diese Funktion ist speziell dann von Vorteil, wenn im zweiten Schaltzustand der Lenkung 10 für hochautomatisiertes Fahren ein Redundanzsystem ausfällt und die Lenkung 10 gegebenenfalls unter Einhaltung einer gewissen Vorwarnzeit auf manuelles Fahren umgestellt werden muss.

In einem solchen Fall kann es unter Umständen zu einem "Schiefstand" der Lenkhandhabe 12 kommen, d. h. einem Zustand, bei dem eine Mittenstellung der Lenkhandhabe 12 nicht mit einer Geradeausfahrt des Kraftfahrzeugs übereinstimmt. In Ausführungsformen, bei denen die Kopplungseinrichtung 34 als Überlagerungsgetriebe mit Antrieb 48 ausgebildet ist, kann dieser Schiefstand der Lenkhandhabe 12 vom Lenksystem während der Fahrt wieder korrigiert werden.

Bei Ausführungsvarianten gemäß den Figuren 1 bis 4 ist vorstellbar, dass der Fahrer dazu aufgefordert wird, bei nächster Gelegenheit anzuhalten und die Lenkhandhabe 12 in ihre Mittenstellung zu bringen. Durch Überführen der Kopplungseinrichtung 34 in ihre Freigabestellung kann danach mittels des (ohnehin vorgesehenen) elektromechanischen Lenkgetriebes der Lenkwinkel des lenkbaren Kraftfahrzeugrads 13 an die Stellung der Lenkhandhabe 12 angepasst auf Geradeausfahrt eingestellt werden.

## Patentansprüche

1. Fahrzeug-Lenkung mit einer Lenkhandhabe (12) zur manuellen Betätigung der Lenkung (10) und wenigstens einem lenkbaren Fahrzeugrad, das mit der Lenkhandhabe (12) über eine um eine Lenkungsachse (A) drehbare Lenksäule (14) mechanisch koppelbar ist, die eine fest mit der Lenkhandhabe (12) verbundene Eingangswelle (16) und eine an die Eingangswelle (16) koppelbare Ausgangswelle (18) aufweist, deren Drehbewegung über ein Lenkgetriebe eine Lenkbewegung des lenkbaren Fahrzeug-Rads veranlasst, sowie mit einem fest mit einer Karosserie des Fahrzeugs verbundenen Lenkungs-Blockierelement (20) und einer Verriegelungseinrichtung (22), die abhängig von der Position der weiterhin axial verschiebbaren Lenkhandhabe (12) eine Relativdrehung zwischen der Eingangswelle (16) und dem karosseriefesten Lenkungs-Blockierelement (20) wahlweise freigeben oder sperren kann, und wobei weiterhin eine Kopplungseinrichtung (34) vorgesehen ist, die eine Relativdrehung zwischen der Eingangswelle (16) und der Ausgangswelle (18) wahlweise freigeben oder sperren kann,
**gekennzeichnet durch** eine Übertotpunkteinrichtung (42), welche zwischen einer ersten und einer zweiten Axialposition der Lenkhandhabe (12) eine instabile Gleichgewichtsstellung einnimmt und die Lenkhandhabe (12) außerhalb der instabilen Gleichgewichtsstellung in die erste oder zweite Axialposition beaufschlagt.

2. Fahrzeug-Lenkung nach Anspruch 1, wobei die die Verriegelungseinrichtung (22) in der ersten Axialposition der Lenkhandhabe (12) eine Relativdrehung zwischen der Eingangswelle (16) und dem karosseriefesten Lenkungs-Blockierelement (20) freigibt sowie in der zweiten Axialposition der Lenkhandhabe (12) eine Relativdrehung zwischen der Eingangswelle (16) und dem karosseriefesten Lenkungs-Blockierelement (20) sperrt und wobei die Lenkhandhabe (12) in der zweiten Axialposition einen geringeren axialen Abstand zur Ausgangswelle (18) aufweist als in der ersten Axialposition.

3. Lenkung nach Anspruch 1 oder 2, **dadurch gekennzeichnet, dass** die Verriegelungseinrichtung (22) eine Kupplung, insbesondere eine Klauenkupplung ist.

4. Lenkung nach einem der Ansprüche 1 bis 3, **dadurch gekennzeichnet, dass** eine Arretiereinrichtung (30) vorgesehen ist, welche die Lenkhandhabe (12) in der ersten Axialposition und/oder in der zweiten Axialposition axial fixiert.

5. Lenkung nach Anspruch 4, **dadurch gekennzeichnet, dass** die Arretiereinrichtung (30) eine elektromagnetisch betätigte Arretiereinrichtung (30) ist und eine axiale Verschiebung der Lenkhandhabe (12) wahlweise freigeben oder sperren kann.

6. Lenkung nach einem der Ansprüche 1 bis 5, **dadurch gekennzeichnet, dass** ein Federelement (60) vorgesehen ist, welches die Lenkhandhabe (12) in die erste Axialposition beaufschlagt.

7. Lenkung nach einem der vorhergehenden Ansprüche, **dadurch gekennzeichnet, dass** die Kopplungseinrichtung (34) eine Kupplung, insbesondere eine Klauenkupplung ist.

8. Lenkung nach Anspruch 7, **dadurch gekennzeichnet, dass** die Kopplungseinrichtung (34) in einer ersten Axialposition der Lenkhandhabe (12) eine Relativdrehung zwischen der Eingangswelle (16) und der Ausgangswelle (18) sperrt sowie in einer zweiten Axialposition der Lenkhandhabe (12) eine Relativdrehung zwischen der Eingangswelle (16) und der Ausgangswelle (18) freigibt.

9. Lenkung nach einem der Ansprüche 1 bis 6, **dadurch gekennzeichnet, dass** die Kopplungseinrichtung (34) nach Art eines Überlagerungsgetriebes ausgebildet ist.

10. Lenkung nach einem der vorhergehenden Ansprüche, **dadurch gekennzeichnet, dass** die Kopplungseinrichtung (34) und die Verriegelungseinrichtung (22) mechanisch oder elektrisch oder elektronisch so miteinander gekoppelt sind, dass die Kopplungseinrichtung (34) in einer Sperrstellung der Verriegelungseinrichtung (22) ihre Freigabestellung einnimmt, und umgekehrt.

11. Lenkung nach einem der vorangegangenen Ansprüche in einem Fahrzeug, dessen Fahrersitz elektromotorisch verstellbar ist und dieser im Falle der zweiten Axialposition der Lenkhandhabe (12), in welcher diese einen geringeren axialen Abstand zur Ausgangswelle (18) aufweist als in der ersten Axialposition, in eine Position verfahren wird, in welcher auch der Fahrersitz von der Ausgangswelle axial betrachtet weiter beabstandet ist als in der genannten ersten Axialposition der Lenkhandhabe (12).

12. Lenkung nach einem der vorangegangenen Ansprüche mit einer elektronischen Steuereinheit, welche eine axiale Verschiebung der Lenkhandhabe (12) zur Ausgangswelle (18) hin nur dann ermöglicht, wenn sich das Fahrzeug in einem hochautomatisierten Fahrbetrieb bewegen kann und/oder welche eine axiale Verschiebung der Lenkhandhabe (12) von der Ausgangswelle (18) weg dann selbsttätig veranlasst, wenn ein Fehlerüberwachungssystem für einen hochautomatisierten Fahrbetrieb des Fahrzeugs einen sicherheitsrelevanten Fehler erkennt.

13. Lenkung nach einem der vorangegangen Ansprüche, wobei die Lenkhandhabe (12) in der zweiten Axialposition mit einen geringeren axialen Abstand zur Ausgangswelle (18) zumindest anteilig zumindest annähernd bündig in einer Armaturentafel oder dgl. des Fahrzeugs liegt und dann eine Anzeige- und oder Bedieneinheit für den Fahrer aus der Armaturentafel in das direkte Sichtfeld des Fahrers verlagert wird.

## Claims

1. A vehicle steering system having a steering handle (12) for manually actuating the steering system (10) and having at least one steerable vehicle wheel, which can be mechanically coupled to the steering handle (12) via a steering column (14) which is rotatable about a steering system axis (A) and which has an input shaft (16) fixedly connected to the steering handle (12) and an output shaft (18) that can be coupled to the input shaft (16), the rotary movement of which output shaft triggers a steering movement of the steerable vehicle wheel via a steering gear, and having a steering system blocking element (20) fixedly connected to the body of the vehicle and a locking device (22) which can selectively enable or block a relative rotation between the input shaft (16) and the body-mounted steering system blocking element (20) depending on the position of the steering handle (12), which is also axially displaceable, and wherein a coupling device (34) is also provided, which can selectively enable or block a relative rotation between the input shaft (16) and the output shaft (18),
**characterised by** an over-centre device (42), which between a first and a second axial position of the steering handle (12) assumes an unstable position of equilibrium, and outside the unstable equilibrium position forces the steering handle (12) into the first or second axial position.

2. A vehicle steering system according to claim 1, wherein the locking device (22) in the first axial position of the steering handle (12) enables a relative rotation between the input shaft (16) and the body-mounted steering blocking element (20) and in the second axial position of the steering handle (12) blocks a relative rotation between the input shaft (16) and the body-mounted steering system blocking element (20), and wherein the steering handle (12) in the second axial position is arranged at a shorter axial distance from the output shaft (18) than in the first axial position.

3. A steering system according to claim 1 or 2, **characterised in that** the locking device (22) is a clutch, in particular a dog clutch.

4. A steering system according to any one of claims 1 to 3, **characterised in that** a locking device (30) is provided, which axially fixes the steering handle (12) in the first axial position and/or in the second axial position.

5. A steering system according to claim 4, **characterised in that** the locking device (30) is an electromagnetically actuated locking device (30) and can selectively enable or block an axial displacement of the steering handle (12).

6. A steering system according to any one of claims 1 to 5, **characterised in that** a spring element (60) is provided, which forces the steering handle (12) into the first axial position.

7. A steering system according to any one of the preceding claims, **characterised in that** the coupling device (34) is a clutch, more especially a dog clutch.

8. A steering system according to claim 7, **characterised in that** the coupling device (34) in a first axial position of the steering handle (12) blocks a relative rotation between the input shaft (16) and the output shaft (18) and in a second axial position the steering handle (12) enables a relative rotation between the input shaft (16) and the output shaft (18).

9. A steering system according to any one of claims 1 to 6, **characterised in that** the coupling device (34) is formed in the manner of a superposition gear.

10. A steering system according to any one of the preceding claims, **characterised in that** the coupling device (34) and the locking device (22) are mechanically or electrically or electronically coupled to one another such that the coupling device (34) assumes its enabling position in a blocking position of the locking device (22), and vice versa.

11. A steering system according to any one of the preceding claims in a vehicle, the driver's seat of which is adjustable by electric motor and, in the case of the second axial position of the steering handle (12), in which position said steering handle is arranged at a shorter axial distance from the output shaft (18) than in the first axial position, is moved into a position in which the driver's seat is also distanced further from the output shaft, as considered axially, than in the aforementioned first axial position of the steering handle (12).

12. A steering system according to any one of the preceding claims, having an electronic control unit which allows an axial displacement of the steering handle (12) toward the output shaft (18) only if the vehicle can move in a highly automated driving mode and/or which automatically triggers an axial displacement of the steering handle (12) away from the output shaft (18) if a fault monitoring system identifies a safety-relevant fault for a highly automated driving mode of the vehicle.

13. A steering system according to any one of the preceding claims, wherein the steering handle (12) in the second axial position at a shorter axial distance from the output shaft (18) is arranged at least in part at least approximately flush in a dashboard or the like of the vehicle, and a display and/or control unit for the driver is then moved from the dashboard into the direct field of view of the driver.

## Revendications

1. Système de direction de véhicule comprenant un volant de direction (12) permettant un actionnement manuel de la direction (10) et, au moins une roue de véhicule orientable qui peut être couplée mécaniquement au volant (12) par l'intermédiaire d'une colonne de direction (14) mobile en rotation autour d'un axe de direction (A) qui comporte un arbre d'entrée (16) relié solidairement au volant (12) et un arbre de sortie (18) pouvant être couplé à l'arbre d'entrée (16) et dont la rotation permet un déplacement de direction de la roue orientable du véhicule, par l'intermédiaire d'une transmission de direction ainsi qu'un élément de blocage de la direction (20) relié solidairement à la carrosserie du véhicule et un dispositif de verrouillage (22) qui peut sélectivement libérer ou bloquer en fonction de la position du volant de direction (12) qui est en outre susceptible de coulisser axialement une rotation relative entre l'arbre d'entrée (16) et l'élément de blocage de la direction (20) solidaire de la carrosserie, et un dispositif de couplage (34) qui peut sélectivement libérer ou bloquer une rotation relative entre l'arbre d'entrée (16) et l'arbre de sortie (18) étant en outre prévu,
**caractérisé par**
un dispositif de dépassement du point mort (42) qui prend une position d'équilibre instable, entre une première position axiale et une seconde position axiale du volant (12) et rappelle le volant (12) en dehors de la position d'équilibre instable vers la première ou vers la seconde position axiale.

2. Direction de véhicule conforme à la revendication 1,
dans laquelle dans la première position axiale du volant (12) le dispositif de verrouillage (22) libère une rotation relative entre l'arbre d'entrée (16) et l'élément de blocage de direction (20) solidaire de la carrosserie, et, bloque dans la seconde position axiale du volant de direction (12) une rotation relative entre l'arbre d'entrée (16) et l'élément de blocage de direction (20) solidaire de la carrosserie, et, dans la seconde position axiale, le volant de direction (12) est à une plus faible distance axiale de l'arbre de sortie (18) que dans la première position axiale.

3. Système de direction conforme à la revendication 1 ou 2,
**caractérisé en ce que**
le dispositif de verrouillage (22) comporte un embrayage, en particulier un embrayage à griffes.

4. Système de direction conforme à l'une des revendications 1 à 3,
**caractérisé en ce qu'**
il est prévu un dispositif d'arrêt (30) qui fixe axialement le volant de direction (12) dans la première position axiale et/ou dans la seconde position axiale.

5. Système de direction conforme à la revendication 4,
**caractérisé en ce que**
le dispositif d'arrêt (30) est un dispositif d'arrêt (30) à actionnement électromagnétique et peut sélectivement libérer ou bloquer un coulissement axial du volant de direction (12).

6. Système de direction conforme à l'une des revendications 1 à 5,
**caractérisé en ce qu'**
il est prévu un élément élastique (60) qui rappelle le volant de direction (12) dans la première position axiale.

7. Système de direction conforme à l'une des revendications précédentes,
**caractérisé en ce que**
le dispositif de couplage (34) est un embrayage, en particulier un embrayage à griffes.

8. Système de direction conforme à la revendication 7,
**caractérisé en ce que**
dans une première position axiale du volant de direction (12) le dispositif de couplage (34) bloque une rotation relative entre l'arbre d'entrée (16) et l'arbre de sortie (18), et libère dans une seconde position axiale du volant de direction (12) une rotation relative entre l'arbre d'entrée (16) et l'arbre de sortie (18).

9. Système de direction conforme à l'une des revendications 1 à 6,
**caractérisé en ce que**
le dispositif de couplage (34) est réalisé sous la forme d'une transmission différentielle.

10. Système de direction conforme à l'une des revendications précédentes,
**caractérisé en ce que**
le dispositif de couplage (34) et le dispositif de verrouillage (22) sont couplés mécaniquement, électriquement ou électroniquement de sorte que dans la position de blocage du dispositif de verrouillage (22) le dispositif de couplage (34) prenne sa position de libération et inversement.

11. Système de direction conforme à l'une des revendications précédentes équipant un véhicule dont le siège du conducteur peut être réglé de façon électromotorisée, et, est déplacé lorsque le volant de direction (12) est dans la seconde position axiale dans laquelle il est à une plus petite distance axiale de l'arbre de sortie (18) que dans la première position axiale, dans une position dans laquelle ce siège du conducteur est également plus éloigné axialement de l'arbre de sortie que dans la première position axiale du volant de direction (12).

12. Système de direction conforme à l'une des revendications précédentes équipé d'une unité de commande électronique qui ne permet un coulissement axial du volant de direction (12) par rapport à l'arbre de sortie (18) que si le véhicule peut se déplacer dans un mode de conduite fortement automatisé et/ou provoque un coulissement axial automatique du volant de direction (12) pour s'éloigner de l'arbre de sortie (18) lorsqu'un système de surveillance de défaut pour le mode de conduite fortement automatisé du véhicule identifie une erreur importante pour la sécurité.

13. Système de direction conforme à l'une des revendications précédentes,
dans lequel dans sa seconde position axiale dans laquelle il est situé à une distance axiale plus faible de l'arbre de sortie (18) le volant de direction (12) est situé au moins en partie au moins approximativement à fleur dans un tableau de bord ou similaire du véhicule, puis, une unité d'affichage et/ou de manoeuvre pour le conducteur est déplacée du tableau de bord dans le champ de vision direct du conducteur.
